# FASCICULE DE BREVET EUROPEEN

(11) **EP 1 528 131 B1**
(45) Date de publication et mention de la délivrance du brevet: **18.06.2008**
(21) Numéro de dépôt: 04100194.2
(22) Date de dépôt: 22.01.2004
(51) Int. Cl.: D04B 21/16, A01G 9/14

(54) **Toile d'Isolation thermique**
Wärmeisolierender Stoff
Heat isolating web

(30) Priorité: 27.02.2003 FR 0302385
(43) Date de publication de la demande: 04.05.2005
(73) Titulaire: MDB TEXINOV SA, 38110 Saint Didier de la Tour (FR)
(72) Inventeur: CASTRO, François, 38510, CREYS MEPIEU (FR); TARDY, Gérard, 38110, SAINT DIDIER DE LA TOUR (FR); DUCOL, Jean-Paul, 69007, LYON (FR)
(74) Mandataire: Vuillermoz, Bruno

(56) Documents cités:
- DE-A- 10 061 010
- US-A- 4 399 671
- US-A- 5 992 088
- US-A1- 2001 034 172

## Description

L'invention concerne une toile d'isolation thermique, plus particulièrement destinée à être mise en place au niveau de vérandas, et de manière générale de tout bâtiment comportant des verrières ou des baies vitrées, et que l'on souhaite isoler de manière amovible, thermiquement et également sur le plan lumineux.

Afin de limiter le rayonnement solaire au sein d'une structure vitrée, et par voie de conséquence, isoler thermiquement l'intérieur d'une telle enceinte, il est connu de positionner sous la paroi en verre, un matériau réfléchissant, propre à réfléchir, à tout le moins en grande partie, les rayons lumineux reçus, outre partie du rayonnement infrarouge - source de chaleur. Un tel matériau réfléchissant peut être de toute nature, cependant, il est fréquemment fait appel à l'aluminium, compte-tenu tout d'abord de son haut pouvoir réfléchissant, d'autre part, de son coût relativement réduit, et enfin de sa relative facilité de manutention.

Traditionnellement, ces écrans sont de type textile, éventuellement muni d'une face brillante obtenue par traitement, et donc généralement présentant une durabilité limitée, outre une efficacité toute relative.

Il est également connu de mettre en oeuvre des bandelettes, en un matériau réfléchissant, typiquement en aluminium, qui sont tissées soit dans une direction soit dans deux directions, et intégrées dans une résine, afin de donner de la cohésion à l'ensemble (voir par exemple DE 100 61 010 A).

Quelle que soit la technique mise en oeuvre, si l'on aboutit certes à un pouvoir de réflexion plus ou moins satisfaisant, en revanche, l'aspect esthétique, de plus en plus recherchée, notamment à l'intérieur de l'enceinte vitrée, est des plus médiocres.

Or, l'invention vise une toile d'isolation thermique, remplissant sa fonction première de réflexion des rayons lumineux, visibles et infrarouges, et susceptible, en outre, de revêtir un aspect décoratif à l'intérieur de l'enceinte vitrée au sein de laquelle est mise en place une telle toile.

Ainsi, la toile d'isolation thermique conforme à l'invention (voir revendication 1), comprend une face réfléchissant le rayonnement lumineux, voire le rayonnement infrarouge, et une face textile proprement dite, et se caractérise de plus :
- en ce que la face réfléchissante est constituée de lamelles réfléchissantes, rigoureusement planes, juxtaposées côte à côte dans le sens de la largeur de la toile, et maintenues entre elles par un réseau de fils ;
- et en ce que le réseau de fils est constitué par un tricot, réalisé sur un métier à tricoter à mailles jetées, à insertion frontale de trame selon une armure du type mailles jetées bloquées avec insertion de trame supplémentaire, propre à constituer sur la face non réfléchissante un support textile uniforme ;
- lesdites lamelles réfléchissantes étant tramées sur toute la largeur du tricot.

Ce faisant, on réalise un matériau textile dissymétrique, également dénommé double-face, présentant une face brillante à très fort pouvoir de réflexion, et une face « *textile* », laquelle est susceptible de conférer un aspect agréable et esthétique au produit.

Si la mise en oeuvre de bandelettes d'aluminium, et de manière générale de tout matériau réfléchissant au sein d'une structure textile n'est certes pas nouveau, en revanche, le maintien de ces bandelettes sous forme rigoureusement plane, au sein d'une structure textile, est nouveau, et en l'espèce est impératif pour les raisons suivantes.

En effet, il est connu, par exemple dans les serres, de mettre en place un matériau réfléchissant en fonction de l'éclairement, afin de maintenir une température sensiblement constante, et surtout, afin d'éviter de trop importantes déperditions de chaleur à l'intérieur de la serre, en vue de réaliser des économies d'énergie.

Une telle toile intègre des bandelettes d'aluminium au sein d'une structure textile, mais, la planéité desdites bandelettes n'est pas nécessairement recherchée, et l'on observe des vrilles ou torsions, inhérentes notamment aux propriétés mécaniques de l'aluminium, et en outre au procédé de réalisation de telles toiles.

Si ces défauts sont de moindre importance pour une serre, en revanche, par transparence, ils sont nettement visibles de l'intérieur, c'est à dire face envers, et il ne peut être question de mettre en oeuvre de telles toiles au sein d'un habitat, et notamment d'une véranda.

Or, l'invention permet justement de s'affranchir de ces défauts, et d'obtenir une planéité parfaite des bandelettes de matériau réfléchissant, et notamment d'aluminium, permettant d'annuler ces défauts.

Qui plus est, la face textile peut être teinte ou imprégnée au choix de l'utilisateur final, conférant ainsi l'aspect esthétique tout particulièrement recherché.

Comme déjà, les lamelles réfléchissantes sont réalisées à base de tout matériau à fort pouvoir réfléchissant, notamment l'aluminium.

La toile en résultant est avantageusement imprégnée d'une résine, par exemple polyuréthane, destinée à lui conférer de la tenue mécanique et du tombant.

Ladite toile peut également être imprégnée d'une résine ignifugeante, susceptible de lui conférer le classement anti-feu M1 voire M0.

Qui plus est, la mise en oeuvre d'une telle résine permet de favoriser les opérations de découpe de la toile aux dimensions souhaitées.

Selon une caractéristique de l'invention, les fils constitutifs du tricot sont réalisés en fil polyester, ou autre, tel que notamment en fibre de verre, ou encore en fil composite verre - PVC.

La manière de réaliser l'invention et les avantages qui en découlent ressortiront mieux de l'exemple de réalisation qui suit donné à titre indicatif et non limitatif à l'appui des figures annexées.

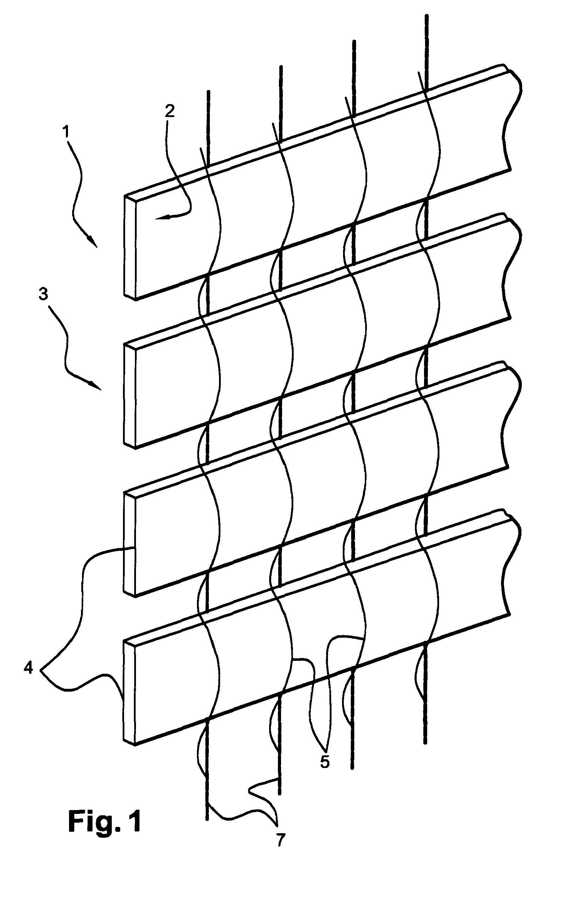

La figure 1 est une représentation schématique de la toile vue face réfléchissante.

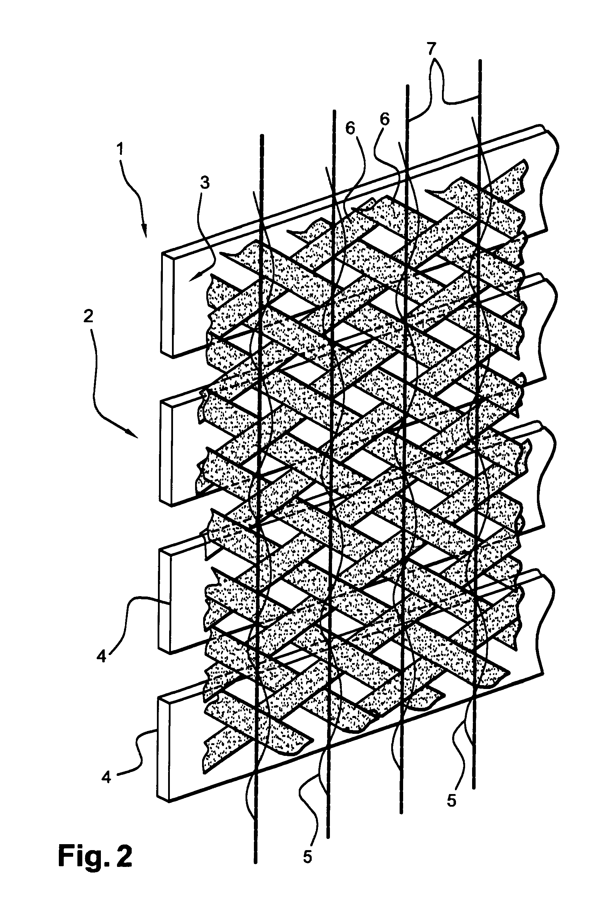

La figure 2 est une représentation schématique de la toile vue face textile.

La toile d'isolation thermique (1) conforme à la présente invention se présente donc sous la forme d'une structure plane, présentant sur l'une (2) de ses faces, dite face réfléchissante, des lamelles réfléchissantes (4) juxtaposées côte à côte dans le sens de la largeur, et maintenues entre elles par un réseau de fils (5), dénommés fils de liage.

Les lamelles réfléchissantes (4) sont constituées de bandelettes d'aluminium. Elles peuvent avantageusement être revêtues sur leurs deux faces d'un film mince de polyester, de telle sorte à pouvoir les manipuler sans difficulté, au niveau du métier à tricoter mis en oeuvre pour la réalisation de ladite structure.

Qui plus est, cette couche polyester permet d'éviter les phénomènes d'oxydation auxquels est soumis l'aluminium en atmosphère habituelle.

Les fils de liage (5) maillent autour des lamelles (4), et créent ainsi l'espacement entre lesdites lamelles. Cependant, dans la mesure où l'on souhaite aboutir à une capacité de réflexion maximum, on cherche à réduire le plus possible cet espacement. De fait, les fils de liage (5), par exemple réalisés en polyester, sont très fins.

Selon l'invention, le réseau de fils (5) est constitué par un tricot réalisé sur un métier à tricoter à mailles jetées à insertion frontale de trame, et ce selon une armure à mailles jetées avec insertion de trame supplémentaire, c'est à dire selon une armure qui permet d'obtenir une juxtaposition sans interruption des lamelles réfléchissantes, avantageusement maintenues à intervalles réguliers par des fils verticaux (7) (c'est à dire parallèles au sens de production de la toile), représentés en traits discontinus sur les figures.

Typiquement, le métier à tricoter utilisé est un métier disponible auprès de la société KARL MAYER ou de la société LIBA, d'un type en soi connu.

L'autre face de la toile, ci-après dénommée face textile (3) ou face de couverture, à vocation décorative, est réalisée par tricotage sur le même métier. On choisit pour ce faire une armature appropriée, afin de créer un maximum de couverture. Une telle armure est par exemple un double tricot et satin de longues jetées.

Cette face est liée à la face réfléchissante (2) par le réseau de fils de liage (5).

Les fils constitutifs de cette face textile (3) peuvent être du polyester, avantageusement gonflant, c'est à dire présentant un certain volume. Cet aspect gonflant peut notamment être obtenu, de manière connue, par texturation. Il permet d'obtenir une bonne couverture de la face réfléchissante, dans l'objectif de cacher ou d'occulter la face réfléchissante (2) lorsque l'on regarde ladite toile du coté de la face textile. Qui plus est, la mise en oeuvre de tels fils permet d'effectuer postérieurement à la réalisation de la toile, une teinture ou une impression de la face textile, propre à lui conférer un aspect esthétique ou décoratif. Cette teinture ou cette impression est réalisée selon les procédés habituellement mis en oeuvre avec les structures textiles traditionnelles.

Les fils constitutifs de ladite face textile (3) peuvent également être constitués de fibres de verre, ou de fils composite verre-PVC.

Afin d'améliorer la résistance dans le sens de la longueur, et notamment maîtriser le resserrement des lamelles réfléchissantes, et ainsi que déjà précisé précédemment, on incorpore un troisième fil (7) ne formant pas de maille, mais qui se trouve simplement emprisonné à l'intérieur de la structure tricotée, constitutive de la face textile de la structure, tel qu'on peut l'observer sur les figures.

L'ensemble ainsi obtenu peut subir une imprégnation standard de résine, par exemple de polyuréthane, à l'aide par exemple d'un dispositif foulard + râcle, susceptible de lui conférer de la tenue et du tombant, et favorisant en outre la découpe ultérieure, en particulier dans le cas des stores à lamelles verticales.

Cette résine peut également être ignifugeante, permettrant alors à la toile en résultat d'être compatible avec le classement anti-feu M1 voire M0.

On dispose de fait, d'une structure textile dissymétrique, pratiquement indéformable, tant dans le sens de la longueur que dans le sens de la largeur, et adaptée pour être utilisée, à l'instar d'un rideau, comme toile d'isolation thermique au niveau de toute enceinte vitrée, de type véranda, et autres structures ou architectures en verre ou en matériau transparent, voire simplement des baies vitrées.

## Revendications

1. Toile d'isolation thermique comprenant une face (2) réfléchissant le rayonnement lumineux, voire le rayonnement infrarouge, ***caractérisée* :**
- **en ce que** la face réfléchissante (2) est associée à une face textile (3),
- **en ce que** la face réfléchissante (2) est constituée de lamelles réfléchissantes (4), rigoureusement planes, juxtaposées côte à côte dans le sens de la largeur de la toile, et maintenues entre elles par un réseau de fils de liage (5) ;
- et **en ce que** le réseau de fils (5) est constitué par un tricot, réalisé sur un métier à tricoter à mailles jetées, à insertion frontale de trame selon une armure du type à mailles jetées avec insertion de trame supplémentaire, propre à constituer sur la face non réfléchissante un support textile uniforme ;
lesdites lamelles réfléchissantes (4) étant tramées sur toute la largeur du tricot.

2. Toile d'isolation thermique selon la revendication 1, ***caractérisée* en ce que** les lamelles réfléchissantes (4) sont réalisées à base de tout matériau à fort pouvoir réfléchissant.

3. Toile d'isolation thermique selon la revendication 2, ***caractérisée* en ce que** le matériau choisi est l'aluminium.

4. Toile d'isolation thermique selon l'une des revendications 1 à 3, *caractérisée* en que la face textile (3) est teinte ou imprimée.

5. Toile d'isolation thermique selon l'une des revendications 1 à 4, ***caractérisée* en ce qu'**elle est imprégnée d'une résine, destinée à lui conférer de la tenue mécanique et du tombant.

6. Toile d'isolation thermique selon l'une des revendications 1 à 4, ***caractérisée* en ce qu'**elle est imprégnée d'une résine ignifugeante, destinée à lui conférer le classement anti-feu.

7. Toile d'isolation thermique selon l'une des revendications 1 à 6, ***caractérisée* en ce que** les fils constitutifs du tricot sont réalisés en polyester, notamment texturé.

8. Toile d'isolation thermique selon la revendication 7, ***caractérisée* en ce que** les fils constitutifs du tricot sont réalisés en composite verre - PVC ;

9. Toile d'isolation thermique selon l'une des revendications 2 à 8, ***caractérisée* en ce que** les lamelles réfléchissantes (4) sont réalisées en aluminium, et **en ce qu'**elles sont revêtues sur leur deux faces de résine polyester.

## Claims

1. Thermal insulation fabric comprising one side (2) reflecting light radiation, or even infrared radiation, ***characterized***
- **in that** the reflecting side (2) is associated with a textile side (3),
- **in that** the reflecting side (2) consists of strictly flat reflecting strips (4), juxtaposed side by side in the width direction of the fabric, and held together by a network of binding threads (5);
- and **in that** the thread network (5) is formed by a knit, prepared on a warp knitting machine, with frontal weft insertion according to a forward stitch type armure weave with additional weft insertion, suitable for constituting a uniform textile support on the non-reflecting side;
the said reflecting strips (4) being picked on the whole width of the knit.

2. Thermal insulation fabric according to Claim 1, ***characterized* in that** the reflecting strips (4) are prepared on the basis of any material having a high reflecting power.

3. Thermal insulation fabric according to Claim 2, ***characterized* in that** the material selected is aluminium.

4. Thermal insulation fabric according to one of Claims 1 to 3, ***characterized* in that** the textile side (3) is dyed or printed.

5. Thermal insulation fabric according to one of Claims 1 to 4, ***characterized* in that** it is impregnated with a resin, designed to impart mechanical strength and weight.

6. Thermal insulation fabric according to one of Claims 1 to 4, ***characterized* in that** it is impregnated with a fire-resistant resin, designed to confer a fire-resistant classification.

7. Thermal insulation fabric according to one of Claims 1 to 6, ***characterized* in that** the yarns constituting the knit are prepared from polyester, in particular texturized.

8. Thermal insulation fabric according to Claim 7, ***characterized* in that** the yarns constituting the knit are prepared from glass-PVC composite.

9. Thermal insulation fabric according to one of Claims 2 to 8, ***characterized* in that** the reflecting strips (4) are prepared from aluminium and **in that** they are coated on both sides with a polyester resin.

## Patentansprüche

1. Wärmeisolierender Stoff, welcher eine Seite (2) umfasst, die die Lichtstrahlung, insbesondere die Infrarotstrahlung, reflektiert, **da*durch gekennzeichnet:***
- **dass** die reflektierende Seite (2) einer textilen Fläche (3) zugeordnet ist,
- **dass** die reflektierende Seite (2) aus reflektierenden, genau ebenen Lamellen (4) besteht, welche Seite an Seite in Richtung der Breite des Stoffes nebeneinander liegen und durch ein Netz aus Bindefäden (5) nebeneinander gehalten werden;
- und **dass** das Fadennetz (5) aus einer Maschenware besteht, welche auf einer Kettmaschen-Wirkmaschine hergestellt wurde, mit Einführung des Schussfadens von vorn, gemäß einer Bindung des Typs mit Kettmaschen mit Einführung eines zusätzlichen Schussfadens, und welche geeignet ist, auf der nicht reflektierenden Seite eine gleichförmige textile Auflage zu bilden;
wobei die genannten reflektierenden Lamellen (4) über die gesamte Breite der Wirkware eingelegt sind.

2. Wärmeisolierender Stoff nach Anspruch 1, ***dadurch gekennzeichnet,* dass** die reflektierenden Lamellen (4) aus einem beliebigen Material mit einer hohem Reflexionsgrad hergestellt sind.

3. Wärmeisolierender Stoff nach Anspruch 2, ***dadurch gekennzeichnet,* dass** das gewählte Material Aluminium ist.

4. Wärmeisolierender Stoff nach einem der Ansprüche 1 bis 3, ***dadurch gekennzeichnet,* dass** die textile Fläche (3) gefärbt oder bedruckt ist.

5. Wärmeisolierender Stoff nach einem der Ansprüche 1 bis 4, ***dadurch gekennzeichnet,* dass** er mit einem Harz imprägniert ist, welches dazu bestimmt ist, ihm mechanische Festigkeit und Fall zu verleihen.

6. Wärmeisolierender Stoff nach einem der Ansprüche 1 bis 4, ***dadurch gekennzeichnet,* dass** er mit einem feuerbeständigen Harz imprägniert ist, welches dazu bestimmt ist, ihm die Einstufung "feuerfest" zu verleihen.

7. Wärmeisolierender Stoff nach einem der Ansprüche 1 bis 6, ***dadurch gekennzeichnet,* dass** die die Maschenware bildenden Fäden aus, insbesondere texturiertem, Polyester hergestellt sind.

8. Wärmeisolierender Stoff nach Anspruch 7, ***dadurch gekennzeichnet,* dass** die die Wirkware bildenden Fäden aus einem Verbund-material aus Glas und PVC hergestellt sind.

9. Wärmeisolierender Stoff nach einem der Ansprüche 2 bis 8, ***dadurch gekennzeichnet,* dass** die reflektierenden Lamellen (4) aus Aluminium hergestellt sind und dass sie auf ihren beiden Seiten mit Polyesterharz beschichtet sind.
